# EUROPEAN PATENT APPLICATION

(11) **EP 4 746 176 A1**
(43) Date of publication of application: **20.05.2026**
(21) Application number: 25214949.7
(22) Date of filing: 11.11.2025
(51) Int. Cl.: H01M 50/507, H01M 50/503, H01M 50/209

(54) **BUS BAR MODULE**

(30) Priority: 13.11.2024 JP 2024197852
(71) Applicant: Yazaki Corporation, Tokyo 108-0075 (JP)
(72) Inventor: Ogasawara, Shigeyuki, Kakegawa-shi, Shizuoka 437-1421 (JP); Inoue, Hideki, Fujieda-shi, Shizuoka 426-0034 (JP)
(74) Representative: Grünecker Patent- und Rechtsanwälte PartG mbB

(57) **Abstract**

A bus bar module includes a bus bar (11), a bus bar case (20) made of an insulating resin, and an insulating cover (30). The bus bar (11) includes a pair of connection seat portions (12) and a conductive piece portion (13). The bus bar case (20) has an opening (23). The opening (23) exposes each connection seat portion (12) to the front surface side. The bus bar case (20) houses the bus bar (11). The insulating cover (30) is detachably attached to the bus bar case (20). Insulating cover (30) covers the front surface side of the bus bar (11). The bus bar case (20) includes a shielding wall (26) that shields the front surface side of the conductive piece portion (13). A locking piece (27) that locks the conductive piece portion (13) of the bus bar (11) is disposed on the back surface side of the shielding wall (26).

## Description

### BACKGROUND OF THE INVENTION

### Field of the Invention

Embodiments of the present invention relate to a bus bar module.

### Description of the Related Art

In a vehicle such as an electric car or a hybrid car, a battery pack (assembled battery) is used as a power source of a driving motor. The battery pack is configured by assembling a plurality of battery cells. In the plurality of battery cells, for example, electrodes of adjacent battery cells are connected in series by a bus bar. When bus bars are used in a battery pack or the like, each bus bar is housed in a bus bar case made of an insulating resin and used as a bus bar module (refer to Patent Document 1).

In the bus bar module described in Patent Document 1, bus bars are housed in the bus bar case, and the front surface side (the side opposite to the battery pack) of the bus bar housing portion of the bus bar case is covered with a detachable insulating cover. The bus bar includes a pair of connection seat portions connected to electrodes (terminals) of the battery cells, and a conductive piece portion that makes the pair of connection seat portions conductive. The bus bar case is provided with a bus bar housing portion capable of housing the bus bars from the front surface side, and an opening (through hole) in which a pair of connection seat portions of the bus bar is disposed. Each connection seat portion disposed in the opening is engaged with a corresponding electrode of the battery cell and is connected to the corresponding electrode by fastening with a nut or the like. Further, the bus bars housed in the bus bar housing portion are prevented from coming off by a locking claw or the like provided on the bus bar case.

In the bus bar case, the front surface side of the bus bar housing portion is covered with the insulating cover in a state where the bus bar is assembled in the bus bar housing portion. At this time, the insulating cover can maintain the bus bar in an insulated state from the outside by covering the pair of connection seat portions of the bus bar and the front surface side of the conductive piece portion.

### Prior Art Document

### Patent Document

Patent Document 1: Japanese Unexamined Patent Application, First Publication No. 2014-229594

### SUMMARY OF THE INVENTION

The bus bar module described in Patent Document 1 has a structure in which, after the bus bars are assembled to the bus bar case, the connection seat portions of the bus bar and the front surface side of the conductive piece portion are covered with the insulating cover. However, in a case where the conductive terminal portion of the bus bar has a shape extending in a substantially U shape in a direction away from the pair of connection seat portions, and the like, the insulating cover also increases in size as the overall shape of the bus bar increases in size. When the insulating cover is increased in size, the entire bus bar module is increased in size, and the total weight of the bus bar module is also increased.

One embodiment of the present invention is to provide a bus bar module capable of reducing the size and weight of an insulating cover that covers a front surface side of a bus bar.

A bus bar module of one embodiment of the present invention includes a bus bar having a pair of connection seat portions connected to corresponding terminals of an attachment object and a conductive piece portion that makes the pair of connection seat portions conductive, a bus bar case made of an insulating resin, the bus bar case having an opening through which each of the connection seat portions is exposed to a front surface side opposite to the attachment object, the bus bar case housing the bus bar, and an insulating cover detachably attached to the bus bar case and covering the front surface side of the bus bar, wherein the bus bar case includes a shielding wall that shields the front surface side of the conductive piece portion, and a locking piece that locks the conductive piece portion of the bus bar is disposed on a back surface side of the shielding wall, the back surface side being the same side as the attachment object.

According to the bus bar module of one embodiment of the present invention, it is possible to reduce the size and weight of the insulating cover that covers the front surface side of the bus bar.

### BRIEF DESCRIPTION OF THE DRAWINGS

FIG. 1 is a plan view of a bus bar module of an embodiment;
FIG. 2 is a rear view of the bus bar module of the embodiment;
FIG. 3 is an enlarged plan view of a part of FIG. 1 of the bus bar module of the embodiment;
FIG. 4 is a perspective view of a part of the bus bar module of the embodiment as viewed from a front surface side;
FIG. 5 is an enlarged rear view of a part of FIG. 2 of the bus bar module of the embodiment;
FIG. 6 is a perspective view of a part of the bus bar module of the embodiment as viewed from a back surface side;
FIG. 7 is a rear view of a part of the bus bar module of the embodiment;
FIG. 8 is a cross-sectional view of the bus bar module of the embodiment taken along line VIII-VIII of FIG. 5; and
FIG. 9 is an enlarged plan view of a part of the bus bar module of the embodiment.

### DETAILED DESCRIPTION OF THE INVENTION

Hereinafter, a bus bar module 10 of an embodiment will be described using the drawings.

In the present disclosure, the terms are defined as follows. The term "connection" is not limited to a mechanical connection, and may include an electrical connection. In addition, "connection" is not limited to a case where two elements to be connected are directly connected, and may include a case where two elements to be connected are connected with another element interposed therebetween.

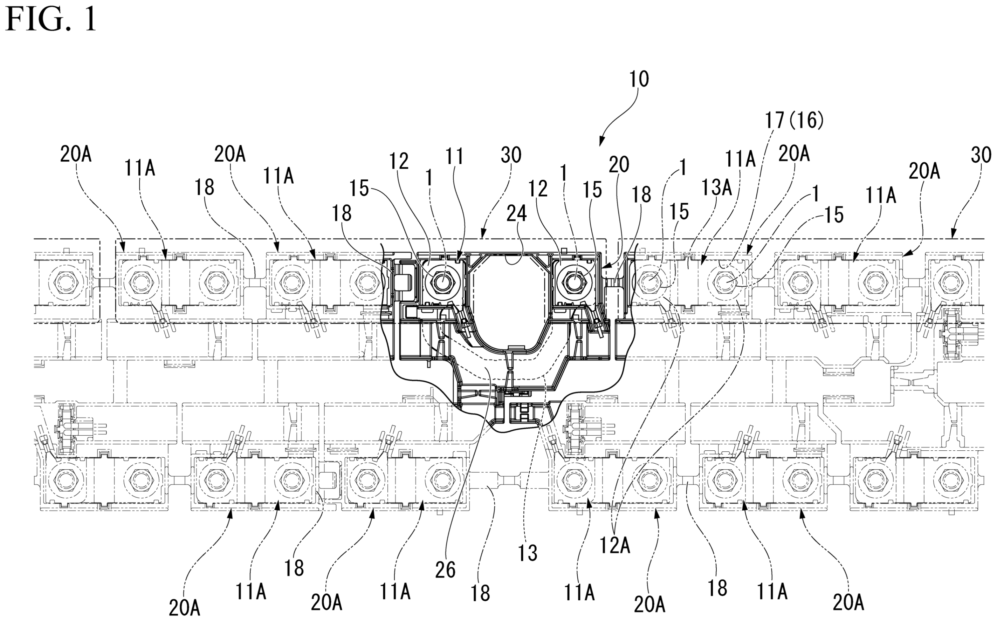

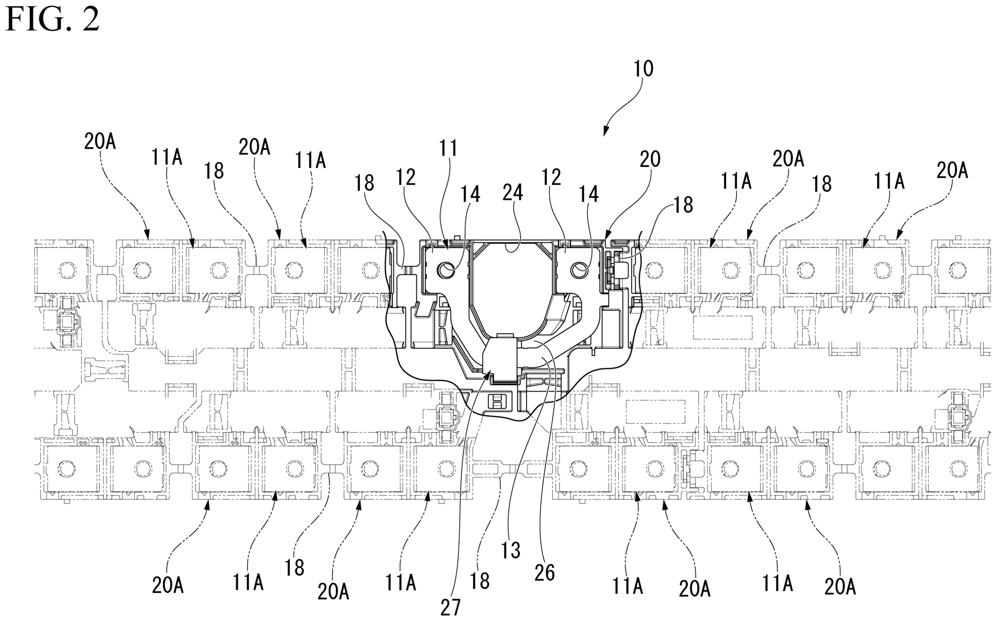

FIG. 1 is a plan view of a bus bar module 10 of the present embodiment. FIG. 2 is a rear view of the bus bar module 10.

The bus bar module 10 of the present embodiment is attached to a battery pack (assembled battery) (not illustrated). The battery pack is configured by stacking a plurality of substantially elongated rectangular parallelepiped battery cells. A pair of columnar electrodes 1 (positive electrode and negative electrode) protrudes from one surface orthogonal to the stacking direction of the respective battery cells. The plurality of battery cells are arranged such that the positions of the positive electrode and the negative electrode are opposite in adjacent battery cells. In the electrodes 1 of the plurality of stacked battery cells, positive electrodes and negative electrodes are alternately and linearly arranged in the stacking direction. The rows of the electrodes 1 in which the positive electrodes and the negative electrodes are alternately arranged are disposed in two rows in plan view of the battery pack.

In the present embodiment, the battery pack constitutes an attachment object, and the electrodes 1 (positive electrode and negative electrode) of each battery cell constitute terminals of the attachment object.

The bus bar module 10 includes a plurality of bus bars 11 and 11A for connecting the plurality of electrodes 1 of the battery packs in series. The bus bars 11 and 11A are formed of a conductive metal plate. As illustrated in FIG. 1, the plurality of bus bars 11 and 11A are arranged in two upper and lower stages in plan view of the bus bar module 10. Each of the bus bars 11 and 11A connects the positive electrode and the negative electrode of the battery cells arranged adjacent to each other in the stacking direction (left-right direction in FIG. 1 and FIG. 2). In the plurality of bus bars 11 and **11A,** the bus bars **11** and **11A** arranged in the upper stage in plan view and the bus bars 11A arranged in the lower stage are arranged to be shifted in the left-right direction because the battery cells are connected in series.

**In** the bus bar module 10 of the present embodiment, in the plan view illustrated in FIG. 1, only the bus bar 11 positioned at the center of the upper stage has a different shape, and the other bus bars **11A** in the upper stage and the lower stage have the same shape. The feature portion of the bus bar module 10 of the present embodiment has the bus bar **11** positioned at the center of the upper stage, a bus bar case 20 to be described later that houses the bus bar **11,** and an insulating cover 30 to be described later that covers a front surface side of a part of the bus bar **11,** as main components. Hereinafter, these main components will be described in detail.

The other bus bars 11A in the upper stage and the lower stage have a pair of connection seat portions 12A having a rectangular shape in plan view and a conductive piece portion 13A that makes the pair of connection seat portions 12A conductive. The conductive piece portion 13A extends between the pair of connection seat portions 12A. A planar view shape of each bus bar 11A, in which the pair of connection seat portions 12A and the conductive piece portion 13A are combined, is formed in a horizontally long rectangular shape as illustrated in FIG. 1.

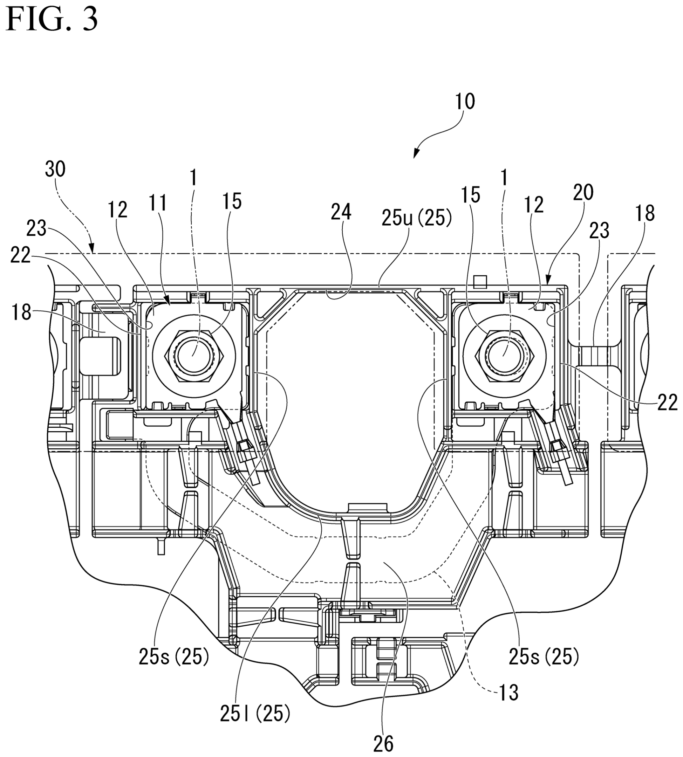

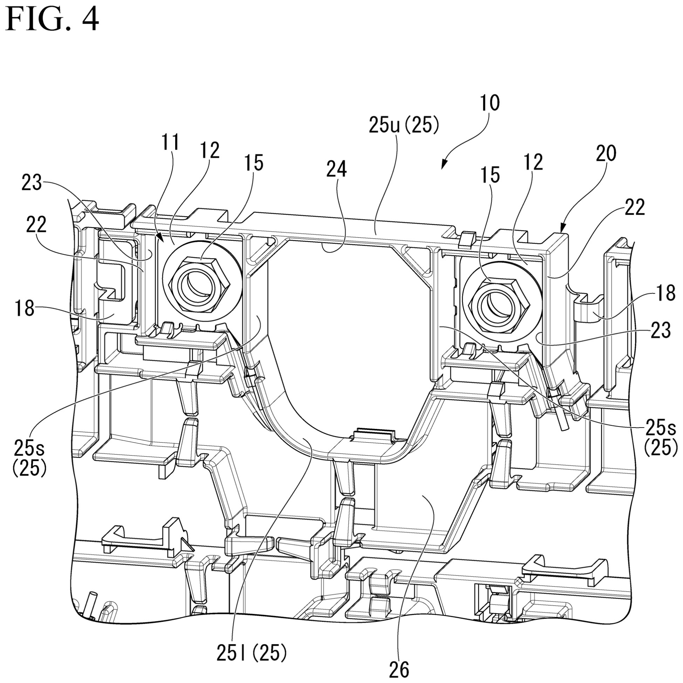

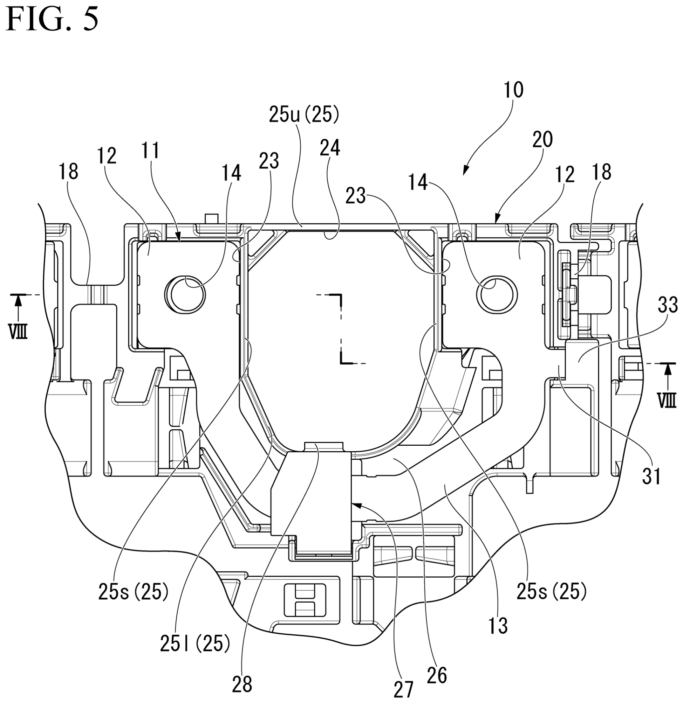

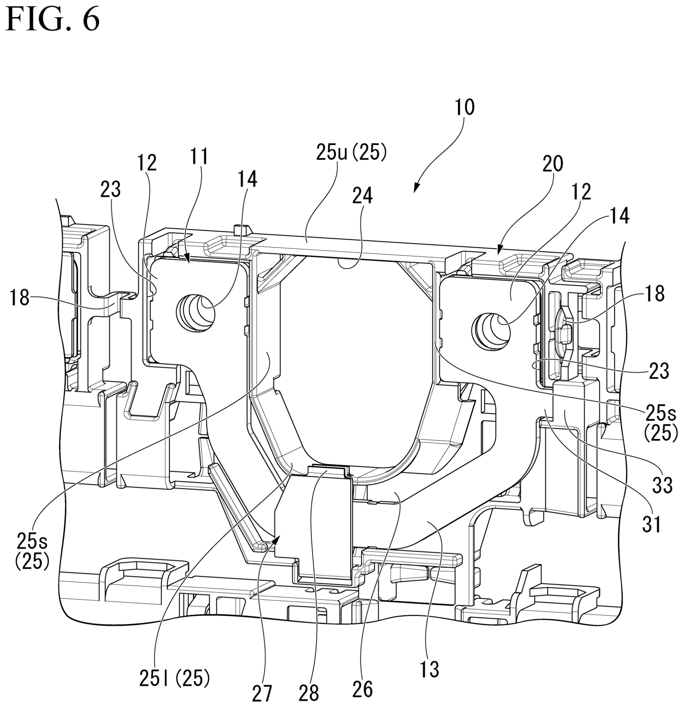

FIG. 3 is an enlarged plan view of a part (the center of the upper stage in FIG. 1) of the bus bar module 10, and FIG. 4 is a perspective view of the same part of the bus bar module 10 as viewed from a front surface side. FIG. 5 is an enlarged rear view of a part (the center of the upper stage in FIG. 2) of the bus bar module 10, and FIG. 6 is a perspective view of the same part of the bus bar module 10 as viewed from a back surface side.

The bus bar 11 at the center of the upper stage has a pair of connection seat portions 12 having a rectangular shape in plan view, and a conductive piece portion 13 that makes the pair of connection seat portions 12 conductive. The conductive piece portion 13 is formed in a substantially U shape in plan view. Both end portions of the substantially U-shaped opening side of the conductive piece portion 13 are connected to one side (a lower side in FIG. 3 to FIG. 6) on the same side of each connection seat portion 12. The substantially U-shaped conductive piece portion 13 extends in a direction intersecting the arrangement direction of the pair of connection seat portions 12. A through hole 14 (refer to FIG. 5 and FIG. 6) into which the electrode 1 of the corresponding battery cell (refer to FIG. 1) is inserted is formed in each connection seat portion 12 of the bus bar 11.

The bus bar 11 at the center of the upper stage is different from the other bus bars 11A in that a separation width between the pair of connective seat portions 12 is wide and that the conduction piece portion 13 has a substantially U shape in plan view. In each of the bus bars 11 and 11A, a nut 15 is tightened to an end portion of the electrode 1 in a state where the electrode 1 is inserted into the through hole 14 of the connection seat portions 12 and 12A. Each electrode 1 is electrically connected to the corresponding connection seat portion 12 or 12A by tightening of the nut 15.

As illustrated in FIG. 1 and FIG. 2, each of the bus bars 11 and 11A is housed in a bus bar case 20 or 20A made of an insulating resin, and in this state, the surface of the connection seat portion 12 or 12A opposite to the side on which the battery pack is disposed is covered with an insulating cover 30. The bus bar cases 20 and 20A are connected to each other by a connecting part 18 having flexibility. The bus bar case 20A has a bus bar housing portion (reference numeral is omitted) opened to the front surface side, and the corresponding bus bar **11A** is housed in the bus bar housing portion from the front surface side. The bus bar **11A** housed in the bus bar housing portion is locked to the bus bar case 20A by a locking claw (not illustrated) or the like.

Hereinafter, the side of the bus bar module 10 opposite to the side on which the battery pack (attachment object) is disposed will be referred to as a "front surface side", and the same side of the bus bar module 10 as the side on which the battery pack (attachment object) is disposed will be referred to as a "back surface side". In addition, a direction in which the front surface side and the back surface side communicate with each other may be referred to as a "front and back direction".

In addition, hereinafter, for convenience of description, the upper side in the drawings of FIG. 1 to FIG. 6 is referred to as "upper", and the lower side in the drawings is referred to as "lower". The left-right direction in the drawings is referred to as a "left-right direction".

As illustrated in FIG. 3 and FIG. 4, a pair of cover walls 22 surrounding the peripheral region of the connection seat portion 12 of the bus bar 11 is formed on the front surface side of the bus bar case 20. Each cover wall 22 is formed in a substantially rectangular shape in plan view. The inside of each cover wall 22 penetrates in the front and back direction. This penetrating portion constitutes an opening 23 for exposing the connection seat portion 12 of the bus bar 11 to the front surface side.

As illustrated in FIG. 3 to FIG. 6, a through hole 24 penetrating the bus bar case 20 in the front and back direction is formed between the pair of cover walls 22. The through hole 24 is formed in a substantially elliptical plan view shape elongated in the vertical direction. The through hole 24 is surrounded by a peripheral wall 25 standing in the front and back direction. As a part of the peripheral wall 25, a part of each of the left and right cover walls 22 is shared. The peripheral wall 25 includes sharing parts 25s with the left and right cover walls 22, an upper side part 25u located above the left and right sharing parts 25s, and a lower side part 251 located below the left and right sharing parts 25s. The lower side part 251 bulges in a concave shape downward in the drawing from the left and right cover walls 22.

The through hole 24 formed in the bus bar case 20 is a hole for exposing, to the outside, a bolt fastening portion, an equipment operating portion, and the like protruding from the outer surface of the battery pack to which the bus bar module 10 is attached. The through hole 24 is opened with a large area in order to operate a large bolt or equipment. The shape of the through hole 24 is not limited to an elliptical shape.

On the lower side of the left and right cover walls 22 and the peripheral wall 25 of the bus bar case 20, a shielding wall 26 extending in a direction substantially orthogonal to the standing direction of the cover walls 22 and the peripheral wall 25 is provided. The substantially U-shaped conductive piece portion 13 of the bus bar 11 is disposed along the shielding wall 26 on the back surface side of the shielding wall 26. In a state where the bus bar 11 is assembled to the bus bar case 20, the shielding wall 26 shields the front surface side of the conductive piece portion 13 of the bus bar 11. The bus bar case 20 is formed of an insulating resin. Therefore, the front surface side of the conductive piece portion 13 of the bus bar **11** is electrically shielded by the shielding wall 26.

As illustrated in FIG. 5 and FIG. 6, a locking piece 27 for locking the conductive piece portion 13 of the bus bar **11** from the back surface side is provided on the back surface side of the shielding wall 26. An upper end side of the locking piece 27 is connected to the lower side part 251 of the peripheral wall 25 by an integral hinge 28. The integral hinge 28 is disposed at a substantially central position in the left-right direction of the lower side part 251 of the peripheral wall 25. The locking piece 27 is formed integrally with the main body portion of the bus bar case 20 via the integral hinge 28. The locking piece 27 is rotatable about the integral hinge 28 at the upper end. The locking piece 27 can be displaced between a closed position close to (substantially parallel to) the back surface of the shielding wall 26 and an open position separated from the shielding wall 26.

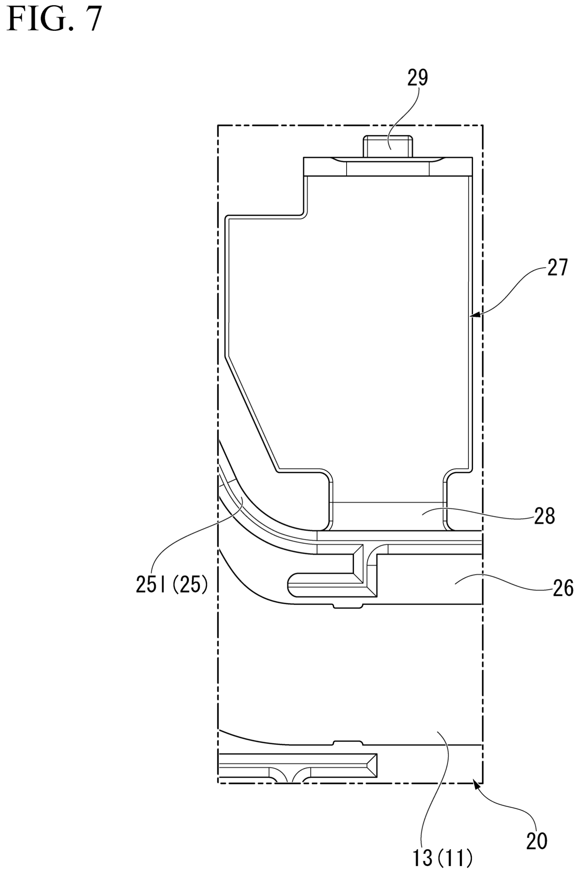

FIG. 7 is a rear view of a part of the bus bar module 10 illustrating a state where the locking piece 27 is opened.

As illustrated in FIG. 7, a locking claw 29 is integrally formed at an end portion of the locking piece 27 on a side away from the integral hinge 28. On the back surface of the shielding wall 26, a locking part (not illustrated) is formed at a position facing the locking claw 29 of the locking piece 27. The locking piece 27 is locked at the closed position by the locking claw 29 being locked to the locking part at the closed position. When the conductive piece portion 13 of the bus bar 11 is set on the back surface side of the shielding wall 26 and the locking piece 27 is locked at the closed position in that state, the conductive piece portion 13 of the bus bar **11** is pressed by the locking piece 27. As a result, in the bus bar 11, a substantially central position in the left-right direction of the conductive piece portion 13 is locked by the locking piece 27.

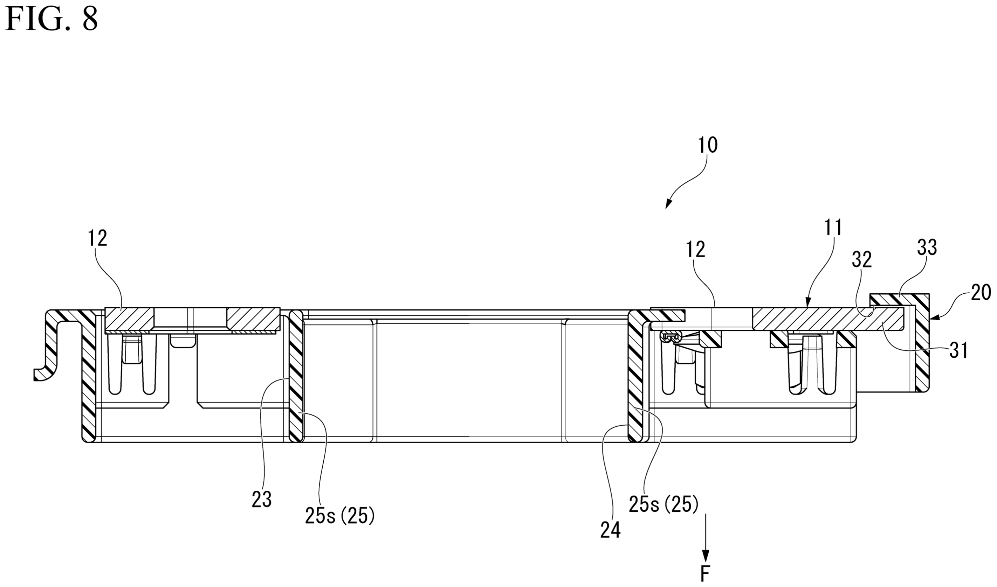

FIG. 8 is a cross-sectional view of the bus bar module 10 taken along line VIII-VIII in FIG. 5. An arrow F in FIG. 8 indicates the front surface side of the bus bar module 10.

As illustrated in FIG. 5, FIG. 6, and FIG. 8, a protruding piece 31 protruding outward in the left-right direction is integrally formed on one end side of the conductive piece portion 13 of the bus bar **11** (in the vicinity of the connecting part with the one connection seat portion 12).

An insertion hole 32 into which the protruding piece 31 is inserted from the inside in the left-right direction and a locking wall 33 are provided at a position corresponding to the protruding piece 31 of the bus bar case 20. The locking wall 33 is a wall continuous with the insertion hole 32, and abuts on the back surface of the protruding piece 31 inserted into the insertion hole 32. In the bus bar 11, the back surface of the protruding piece 31 abuts on the locking wall 33, whereby displacement of the base portion of one of the conductive piece portions 13 toward the back surface side is restricted.

**In** the present embodiment, the protruding piece 31 abuts on the bus bar case 20 (the locking wall 33) to form a displacement restricting portion that restricts displacement of the connection seat portion 12 toward the back surface side.

Next, assembly of the bus bar **11** to the bus bar case 20 will be described.

The locking piece 27 of the bus bar case 20 is opened in advance. In this state, the bus bar 11 is disposed on the back surface side of the bus bar case 20, the bus bar 11 is inclined in the left-right direction, and the tip portion of the protruding piece 31 of the bus bar 11 is inserted into the insertion hole 32 of the bus bar case 20.

Thereafter, as illustrated in FIG. 8, the posture of the bus bar 11 is changed such that the bus bar 11 is substantially parallel to the back surface of the shielding wall 26. At this time, the left and right connection seat portions 12 of the bus bar 11 are disposed in the corresponding openings 23 of the bus bar case 20, and the conductive piece portion 13 of the bus bar 11 is disposed close to the back surface of the shielding wall 26 of the bus bar case 20.

Next, the locking piece 27 of the bus bar case 20 is closed, and the locking claw 29 of the locking piece 27 is locked to the locking part. As a result, the conductive piece portion 13 of the bus bar 11 is locked by the locking piece 27, and the bus bar 11 is assembled to the bus bar case 20.

The bus bar module 10 in which the bus bar 11 is assembled to the bus bar case 20 is mounted in the battery pack, and the left and right connection seat portions 12 of the bus bar 11 are connected to the corresponding electrodes 1 of the battery pack by nuts 15. Thereafter, the insulating cover 30 is attached to the front surface side of the bus bar case 20.

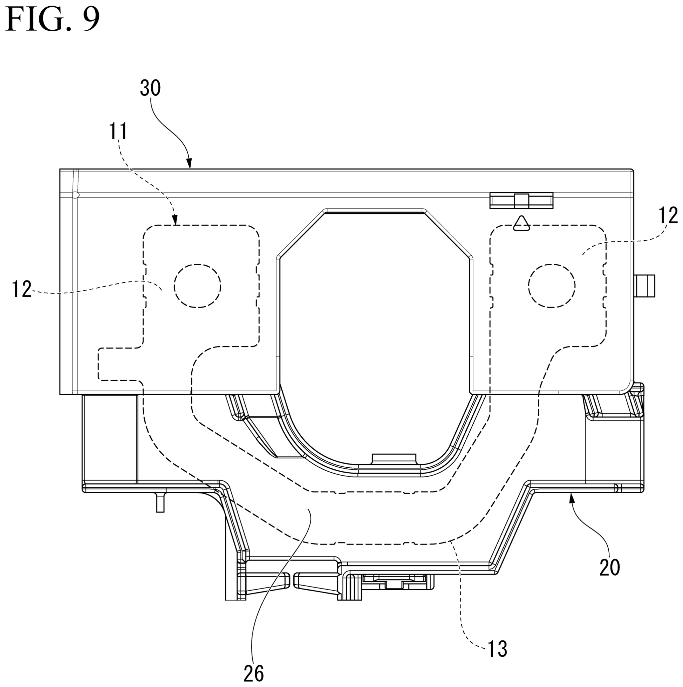

FIG. 9 is an enlarged plan view of a part of the bus bar module 10 to which the insulating cover 30 is attached.

As illustrated in FIG. 9, the vertical width of the insulating cover 30 is set to be slightly wider than the vertical width of the left and right connection seat portions 12 of the bus bar 11. The insulating cover 30 is set to have a vertical width that does not overlap the entire region of the conductive piece portion 13 of the bus bar 11 in the front and back direction. A front surface side of a region of the conductive piece portion 13 of the bus bar 11 that does not overlap the insulating cover 30 in the front and back direction is covered with the shielding wall 26. Therefore, the region of the conductive piece portion 13 that does not overlap the insulating cover 30 in the front and back direction is insulated from the outside by the shielding wall 26.

As described above, in the bus bar module 10 of the present embodiment, the bus bar case 20 includes the shielding wall 26 that shields the front surface side of the conductive piece portion 13 of the bus bar 11. The locking piece 27 that locks the conductive piece portion 13 of the bus bar 11 is disposed on the back surface side of the shielding wall 26. In this case, since the conductive piece portion 13 of the bus bar 11 is locked by the locking piece 27 on the back surface side of the shielding wall 26, the front surface side of the conductive piece portion 13 of the bus bar 11 can be electrically shielded by the shielding wall 26 in a state where the bus bar 11 is supported by the bus bar case 20. For this reason, in the bus bar module 10 of the present embodiment, the vertical width of the insulating cover 30 can be narrower than the width in which the insulating cover 30 completely covers the front surface side of the conductive piece portion 13.

Therefore, when the bus bar module 10 of the present embodiment is adopted, it is possible to reduce the size and weight of the insulating cover 30 covering the front surface side of the bus bar 11.

Further, in the bus bar module 10 of the present embodiment, the locking piece 27 that supports the conductive piece portion 13 of the bus bar 11 is integrally formed with the main body portion of the bus bar case 20 via the integral hinge 28. In the bus bar module 10 of the present embodiment, with this configuration, an operation of separately assembling the locking piece 27 to the bus bar case 20 becomes unnecessary.

Therefore, when this configuration is adopted, it is possible to facilitate assembly of the bus bar module 10.

In addition, the bus bar module 10 of the present embodiment has a shape in which the conductive piece portion 13 of the bus bar 11 extends in a substantially U shape in a direction intersecting the arrangement direction of the pair of connection seat portions 12. Due to the shape of the conductive piece portion 13, the bus bar module 10 can avoid interference with the bolt fastening portion, the equipment operating portion, and the like protruding from the outer surface of the battery pack. The bus bar module 10 of the present embodiment can stably support the conductive piece portion 13 on the back surface side of the shielding wall 26 even in a shape having the conductive piece portion 13 extending in a substantially U shape as described above.

Therefore, when the bus bar module 10 having this configuration is adopted, the support stability for the bus bar 11 can also be enhanced.

Further, in the bus bar module 10 of the present embodiment, the protruding piece 31 (displacement restricting portion) that restricts displacement of the connection seat portion 12 toward the back surface side is provided near one connection seat portion 12 of the bus bar 11. With this structure, displacement of the bus bar 11 in the vicinity of the connection seat portion 12 can be restricted by the locking piece 27 in a state where the conductive piece portion 13 of the bus bar 11 is supported by the locking piece 27.

Therefore, when this configuration is adopted, the support stability of the bus bar 11 can be further improved.

Although the embodiment of the present disclosure has been described above, the embodiment is shown as an example and is not intended to limit the scope of the present disclosure. This embodiment can be implemented in various other forms, and various omissions, substitutions, and changes can be made without departing from the gist of the present disclosure.

For example, in the above embodiment, the battery pack (assembled battery) is adopted as an object to which the bus bar module is attached, but the object to which the bus bar module is attached is not limited to the battery pack. The attachment object may be, for example, a terminal block or the like having a relay terminal as long as it is a component having an energizing terminal.

Further, the bus bar 11 of the above embodiment has a shape in which the substantially U-shaped conductive piece portion 13 extends in one direction from the pair of connection seat portions 12, but the shape of the bus bar 11 is not limited to this shape. The conductive piece portion of the bus bar may have a shape other than the substantially U shape as long as the conductive piece portion extends in one direction from the pair of connection seat portions.

In the above embodiment, the locking piece 27 for locking the conductive piece portion 13 of the bus bar 11 to the back surface side of the shielding wall 26 is integrally provided on the main body portion of the bus bar case 20 via the integral hinge 28. However, the locking piece 27 may be configured as a separate component from the main body portion of the bus bar case 20. In this case, the locking piece 27 may be locked to the main body portion of the bus bar case 20 by engagement or the like due to unevenness.

Further, in the above embodiment, the connection seat portion 12 of the bus bar 11 is connected to the electrode 1 which is a terminal by fastening using the nut 15, but the connection between the connection seat portion 12 and the terminal is not limited to fastening. The connection seat portion 12 and the terminal can be connected by a method other than fastening, and for example, the connection seat portion 12 may be connected to the terminal by welding or the like.

### Reference Signs List

- 1: Electrode (terminal)
- 10: Bus bar module
- 11: Bus bar
- 12: Connection seat portion
- 13: Conductive piece portion
- 20: Bus bar case
- 23: Opening
- 26: Shielding wall
- 27: Locking piece
- 28: Integral hinge
- 30: Insulating cover
- 31: Protruding piece (displacement restricting portion)

## Claims

1. A bus bar module comprising:
a bus bar (11) having a pair of connection seat portions (12) connected to corresponding terminals (1) of an attachment object and a conductive piece portion (13) that makes the pair of connection seat portions (12) conductive;
a bus bar case (20) made of an insulating resin, the bus bar case (20) having an opening (23) through which each of the pair of connection seat portions (12) is exposed to a front surface side opposite to the attachment object, the bus bar case (20) housing the bus bar (11); and
an insulating cover (30) detachably attached to the bus bar case (20) and covering the front surface side of the bus bar (11),
wherein
the bus bar case (20) includes a shielding wall (26) that shields the front surface side of the conductive piece portion (13), and
a locking piece (27) that locks the conductive piece portion (13) of the bus bar **(11)** is disposed on a back surface side of the shielding wall (26), the back surface side being the same side as the attachment object.

2. The bus bar module according to claim 1, wherein
the locking piece (27) is provided integrally with the bus bar case (20) via an integral hinge (28).

3. The bus bar module according to claim 1 or 2, wherein
the conductive piece portion (13) of the bus bar (11) extends in a substantially U shape in a direction intersecting an arrangement direction of the pair of connection seat portions (12).

4. The bus bar module according to claim 3, wherein
the bus bar (11) is provided, in the vicinity of at least one of the pair of connection seat portions (12), with a displacement restricting portion (31) that abuts on the bus bar case (20) and restricts displacement of the at least one of the pair of connection seat portions (12) toward the back surface side.
